(19)

Europäisches
Patentamt
European
Patent Office
Office européen
des brevets

(11) EP 2 367 300 A1

(12) EUROPEAN PATENT APPLICATION

(43) Date of publication:
21.09.2011 Bulletin 2011/38

(51) Int Cl.:
H04B 10/08 (2006.01)        H04L 12/24 (2006.01)
H04L 12/26 (2006.01)

(21) Application number: 10290134.5

(22) Date of filing: 15.03.2010

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA ME RS

(71) Applicant: Institut Telecom - Telecom Paristech
75634 Paris Cedex 13 (FR)

(72) Inventors:
• Doumith, Elias
  92320 Chatillon (FR)
• Al Zahr, Sawsan
  75014 Paris (FR)

• Gagnaire, Maurice
  78400 Chatou (FR)

(74) Representative: Lucas, Laurent Jacques
Marks & Clerk France
Conseils en Propriété Industrielle
Immeuble " Visium "
22, avenue Aristide Briand
94117 Arcueil Cedex (FR)

Remarks:
Claims filed after the date of filing of the application
(Rule 68(4) EPC).

(54) **A method and a system for unambiguous failure localization in translucent optical networks preserving network capacity**

(57)    An optical network comprising a plurality of nodes connected via two or more optical links (a, b, c, d, e, f, g). It comprises means to generate a supervisory optical signal transmitted through the optical links, means to duplicate and forward (401, 403, 405) the supervisory optical signal received by a node towards one or several other nodes, a plurality of optical monitors (402, 404, 406, 407), the said monitors being arranged in order to detect disruptions of the supervisory optical signal and to determine an alarm code (408) allowing to localize network failures.

| | $m_b$ | $m_d$ | $m_f$ | $m_g$ |
|---|---|---|---|---|
| a | 1 | 1 | 0 | 1 |
| b | 1 | 0 | 0 | 0 |
| c | 0 | 1 | 0 | 1 |
| d | 0 | 1 | 0 | 0 |
| e | 1 | 1 | 1 | 1 |
| f | 0 | 0 | 1 | 0 |
| g | 0 | 0 | 0 | 1 |

FIG.4

**Description**

Optical transport networks evolve towards higher data rates and increased wavelength density in wavelength division multiplexing (WDM) systems. Optical component failures such as fiber cuts can lead to a huge amount of data loss. In transparent and translucent optical networks, failure detection and localization is a challenging issue to operate dynamically reconfigurable network with high reliability.

Since failure recovery protocols are implemented at different layers, a failure event at the optical layer, such as a fiber cut, may also trigger alarms at upper protocol layers, as discussed in the article written by P. Demeester, et al. entitled Resilience in multilayer networks, IEEE Communications Magazine, vol. 37, no. 8, pp. 70-76, Aug. 1999. An upper layer protocol generally requires a much longer detection time than an optical/physical layer protocol. Therefore, an intelligent and cost-effective monitoring mechanism dedicated to the network optical layer is mandatory.

Most existing approaches consist in deploying optical monitors responsible for generating alarms upon a single link failure. Monitoring information (i.e. alarms generated by the monitors) are then submitted to the control plane of the optical network so that any routing entity is able to localize the failure and to perform a real time traffic restoration. In the proposed approaches, dedicated supervisory channels are used for monitoring purposes at the detriment of operational lightpaths. In other terms, supervisory channels cannot carry real traffic. Such monitoring schemes are refereed to as "out-of-band monitoring" as opposed to "in-band monitoring" where monitors are supervising operational lightpaths.

The major concern of these approaches is to minimize the monitoring cost while achieving an unambiguous failure localization. The monitoring cost generally accounts for the number of required optical monitors, the number of required laser diodes as well as the number of required supervisory channels. In this work, we propose a novel approach for single failure detection and localization in translucent WDM networks. Our approach relies on the broadcasting capability of an optical network node and still achieves an unambiguous failure localization. It requires a single laser diode and aims at minimizing the number of required monitors while consuming the minimum number of supervisory channels.

Fault detection and localization issues in WDM meshed networks have been extensively addressed and many related studies have been reported in the literature. Most approaches consist in deploying optical monitors responsible for generating alarms upon a failure occurs in the network.

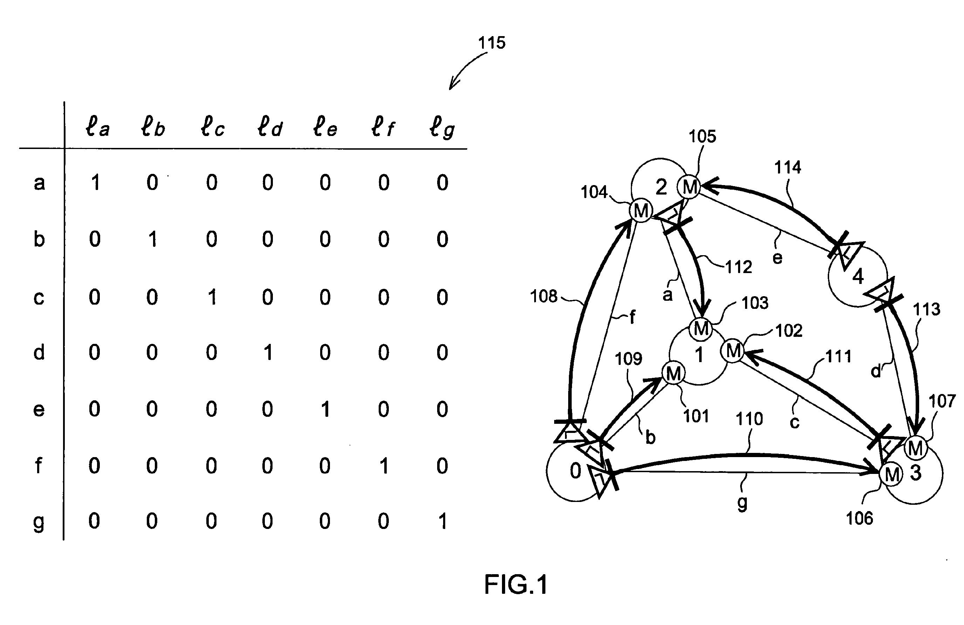

Conventional link-based monitoring scheme requires one monitor for each link and consumes one optical supervisory channel on each link. Such a monitoring scheme costs $|E|$ monitors and $|E|$ optical supervisory channels, where $|E|$ denotes the number of network links. For the network topology shown in figure 1, a link-based monitoring solution requires 7 monitors 101, 102, 103, 104, 105, 106, 107 and 7 optical supervisory channels 108, 109, 110, 111, 112, 113, 114. On the table 115 of figure 1, we can see the monitoring information associated to each link's failure.

More sophisticated approaches aim at reducing the number of monitors in the network while achieving unambiguous failure localization. In the late 2000's, two paradigms for failure detection and localization have been proposed, namely monitoring cycles (m-cycles) and monitoring trails (m-trails).

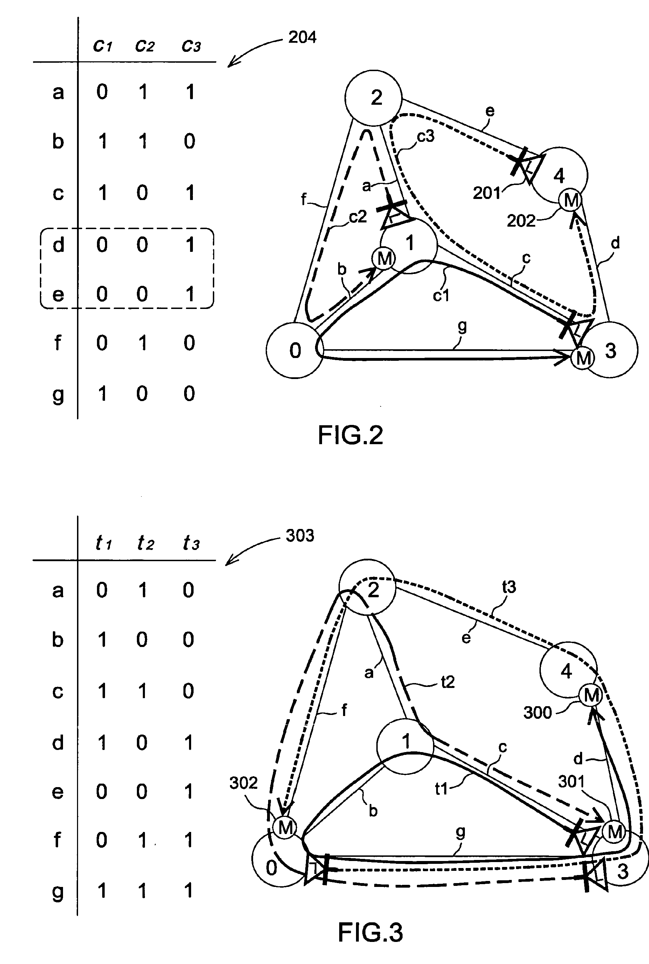

The first aforementioned paradigm is based on monitoring cycles. In the article written by H. Zeng, C. Huang, A. Vukovic, and M. Savoie entitled Fault detection and path performance monitoring in meshed all-optical networks, Proc. of IEEE Globecom, Nov. 2004, vol. 3, pp. 2014-2018, a monitoring scheme based on decomposing the transparent network into a set of cycles so that all nodes and links in the network appear in at least one of these cycles is proposed. An example of this scheme is shown in figure 2. An m-cycle is defined as a loopback connection c1, c2, c3 associated with a pair of optical transceiver 201 and a monitor 202. A supervisory optical signal is transmitted along the cycle consuming one optical channel on each link it traverses. If a failure occurs on a link, the supervisory optical signal will be disrupted and an alarm is generated by its associated monitor.

A monitoring scheme based on the concept of $m$-cycles generally consists of $M$ m-cycles $\{c_1, c_2, c_3, ..., c_M\}$ that cover every link of the considered network. Upon a single link failure, monitors associated to the cycles traversing that link will generate alarms.
Monitoring information produce an alarm code $[\alpha_1, \alpha_2,..., \alpha_M]$, where:

$$a_j = \begin{cases} 1, & \text{if cycle } c_j \text{ traverses the failed link;} \\ 0, & \text{otherwise.} \end{cases}$$

Figure 2 presents a monitoring scheme composed of three m-cycles $\{c_1, c_2, c_3\}$. If link a fails, the monitors associated to cycles $c_2$ and $c_3$ will generate alarms and the monitoring information produce the alarm code [0,1,1]. Similarly, if link b fails, the alarm code [1,1,0] will be generated. All possible alarm codes are summarized on the table 204 of figure 2. From this table, we notice that link d and link e failures generate the same alarm code. Consequently, when receiving the alarm code [0,0,1], one is not able to precisely localize the failing link. One solution to eliminate such an ambiguity consists in using a link-based monitoring either for link d or link e which increases the number of optical monitors as well as the number of required supervisory channels. However, the number of required monitors is remains lower than 7 monitors, required in a pure link-based monitoring scheme. In summary, the m-cycle monitoring scheme presented in figure 2 costs 4 monitors and 11 optical channels.

In the aforementioned article as well as in the two articles written by H. Zeng, C. Huang, and A. Vukovic entitled Spanning-tree based monitoring-cycle construction for fault detection and localization in meshed all-optical networks, Proc. of IEEE ICC, May 2005, vol. 3, pp. 1726-1730 and A novel fault detection and localization scheme for mesh all-optical networks based on monitoring cycles, Photon Network Communications, vol. 11, no. 3, pp. 277-286, May 2006, three algorithms have been proposed to construct m-cycles. These algorithms are named heuristic depth first searching (HDFS), shortest path Eulerian matching (SPEM), and heuristic spanning tree (HST). Given a network topology, these algorithms find a set of *m*-cycles that enable to localize any failure in the network while minimizing the network resources consumption (*i.e.* optical monitors, optical channels). It worth noting that if any ambiguity exists, a link-based monitoring is considered for the ambiguous failure. Based on a carefully designed spanning tree, the HST algorithm yields the best performance in terms of localization degree and number of required wavelengths even though it introduces a larger number of monitors.

In the article written by B. Wu and K. L. Yeung entitled M2-Cycle: an optical layer algorithm for fast link failure detection in all-optical mesh networks, Proc. of IEEE Globecom, Nov. 2006, pp. 1-5, a technic named m$^2$-cycles is proposed. m$^2$-cycles present a more efficient mechanism for link failure localization. Minimum length m-cycles (m$^2$-cycles) are constructed in order to consume the minimum amount of network resources and to achieve the most accurate link failure detection and localization. It has been proved in this article that *m*$^2$-cycle outperforms any spanning tree-based approach, no matter how the spanning tree is constructed. Moreover, numerical results show that m$^2$-cycles require much less network resources than HST.

The first aforementioned paradigm is based on monitoring trails. As stated previously, an *m*-cycle monitoring scheme may be not able to locate without ambiguity individual failures on the network segments; a segment is defined as path made of at least two links where intermediate nodes have a nodal degree of two. Consequently, a loopback monitoring scheme is not the best suited approach for network topologies having segments.

In order to cope with ambiguity, the concept of monitoring trails (m-trails) has been introduced, in particular in the article of B. Wu, P. H. Ho, and K. L. Yeung entitled Monitoring Trail: a new paradigm for fast link failure localization in WDM mesh networks, Proc. of IEEE Globecom, Nov. 2008, pp. 2709-2713.

m-trails break the structure of the cycle by assuming that the optical transmitter and receiver are not necessarily collocated at the same node as shown in figure 3. Although the cycle structure constraint is removed, an m-trail works exactly in the same way as an m-cycle for fast link failure localization. Moreover, an m-trail may be an m-cycle or a non-simple m-cycle (i.e. non-simple m-cycle refer to an m-cycle that traverses multiple times the same node).

Similar to a non-simple m-cycle, an m-trail t1, t2, t3 can traverse a node multiple times but it traverses a link at most once. From figure 3, we can see that an m-trail monitoring scheme is able to associate to each link in the network a unique alarm code 303 and thus, to unambiguously locate any single occurring failure. In the considered example, the m-trails consume 3 monitors 300, 301, 302 and 12 optical channels.

An integer linear program (ILP) formulation for m-trails design has been proposed and developed in the article of B. Wu, P. H. Ho, and K. L. Yeung already mentioned in this description. Optimum solution find an m-trails cover that minimizes the monitoring cost (i.e. number of monitors and number of optical channels) while guaranteeing an unambiguous failure localization. In other terms, the aim of the ILP is to minimize the number of required m-trails as well as their lengths subject to unique alarm code per link. Actually, the number of required monitors can be reduced to a theoretical minimum number of trails given by the equation below :

$$m = \lceil \log_2(|E| + 1) \rceil$$

However, the number of supervisory optical channels is larger than |E|, and the theoretical minimum number of optical channels B can be computed for a given number $k(k \leq m)$ of *m*-trails given by :

$$B = \sum_{\substack{i \geq 1 \\ R_i > 0}} i \times \min(R_{i-1}, C_k^i)$$

where $R_0 = |E|$ , and $R_i = R_{i-1} - C_{k'}^i$, $i \geq 1$.

Numerical results show that *m*-trail-based monitoring schemes can significantly cut down the monitoring cost compared to the *m*-cycle-based monitoring schemes and to pure link-based monitoring schemes. In order to deal with large sized network, a heuristic approach for m-trails design has been proposed in the article written by J. Tapolcai, B. Wu and P. H. Ho entitled On monitoring and failure localization in mesh all-optical networks, Proc. IEEE Infocom, pp. 1008-1016, Apr. 2009.

As introduced previously, three monitoring approaches have been proposed in the literature: the link-based monitoring approach, the m-cycle approach, and the m-trail approach.

In the link-based approach, the position of the laser diodes/optical monitors is straightforward. based approach, the position of the laser diodes/optical monitors is straightforward. Each fiber-link is equipped with a laser diode and an optical monitor at each of its ends, respectively. Thus, an optical supervisory channel is also reserved on every link in order to detect any failure occurring on that link. Consequently, this approach is able to detect and locate without any ambiguity any single link failure as well as multiple link failures in the network. Although this approach consumes the theoretical minimum number of optical supervisory channels, it consumes an excessive number of laser diodes and optical monitors which makes it less attractive for large networks.

The m-cycles have been proposed with the objective to reduce the number of required laser diodes and optical monitors, and subsequently reducing the network monitoring cost. An *m*-cycle is a loop-back optical connection using a supervisory optical channel on each link it traverses, with a laser diode and an optical monitor placed back to back at any node along the loop. However, the major drawback of the m-cycles is their inability to distinguish in some cases between single link failures occurring on different links. In order to localize each link failure without any ambiguity, extra link-based monitors are required.

The m-trails have been proposed as an alternative for the m-cycles with the objective to localize without any ambiguity any single link failure while still reducing the number of required laser diodes and optical monitors. An m-trail works in the same way as an m-cycle, but the optical connection of the supervisory optical channels does not necessarily need to be a loop. Thus, the laser diode and the optical monitor are not necessarily collocated together to maintain the cycle structure. As a result, both link-based and m-cycles monitoring are special cases of m-trails. The former approach is similar to the m-trails approach where all the trails are composed of a single supervisory channel. The latter approach is similar to the m-trails approach where all the trails have a loop shape. It should be noted that the lower the number of laser diodes and optical monitors deployed in the network, the higher the number of optical supervisory channels required for an unambiguous detection. Thus, the m-trail approach tries to find a tradeoff between the cost penalty due to the additional number of optical supervisory channels and the cost benefit due to the reduction of the number of laser diodes and optical monitors.

The invention has for object a method and a system for unambiguous failure localization in translucent optical networks preserving network capacity such as described by the claims.

A better understanding of the embodiments of the present invention can be obtained from the following detailed description in conjunction with the following drawings, in which :

- figure 1 is an illustration of a conventional link-based monitoring scheme;
- figure 2 is an illustration of a scheme based on monitoring cycles ;
- figure 3 is an illustration of a scheme based on monitoring trails;
- figure 4 gives an example illustrating the m-trees concept;
- figure 5 is an illustration of an m-trees scheme where the supervisory signal is broadcasted towards multiple nodes.

One of the limitations of the m-trails is inherent to the fact they consume optical channels in the C-band at the detriment of operational lightpaths. Since wavelength resources are scare in optical networks, we propose a novel approach for fast link failure localization referred to as monitoring-trees (m-trees). The concept of m-trees makes use of the broadcasting capability within a network node. It is meant by broadcast that an optical signal passing through a node can be duplicated and forwarded over two or more outgoing fibers. This functionality is highly available in current WDM networks. Indeed, commonly used fabrics are based on wavelength selective switch (WSS) technology enabling broadcast and select architecture. Such switch fabrics can provide multicasting and broadcasting facilities for every input channel in a truly non-blocking manner.

In the following, we introduce two link attributes, namely ingress link and egress link. The ingress link of a fiber refers to the fiber carrying the initial signal before being duplicated while the egress link of a fiber refers to a fiber carrying a single copy of the duplicated signal. It is worth noting that these attributes are only relative.

As opposed to the *m*-trails which may use multiple optical supervisory channels per link on different wavelengths, the *m*-trees use of a common single optical channel per link. Moreover, as the signal duplication is performed in the optical domain, the optical supervisory signal is carried by the same wavelength on all the network links. This does not only reduce the blocking ratio of the network due to the lack of network resources, but also reduces the blocking ratio due to the wavelength continuity constraint.

The present invention propose an alternative approach named m-tree approach in the sequel. In a m-tree approach, a single laser diode is usually sufficient to monitor all the network. This laser diode is placed at a node and is transmitting its supervisory signal over a single link referred to as the "head of the tree". Arriving at a node along an input link, the supervisory signal can be terminated at the node, forwarded over a single outgoing link, or duplicated and sent over two or more outgoing links. By definition, a supervisory signal terminated at a node should be monitored at that node. Moreover, one may choose to monitor the supervisory signal at different locations in the network in order to be able to distinguish between different single link failures. A link with a monitor deployed at its end is referred to as a "leaf of the tree". To sum up, for a network composed of $|V|$ nodes and $|E|$ links, the $m$-tree approach requires a single laser diode, $|E|$ optical supervisory channels, and less than $|E|$ optical monitors in order to localize without any ambiguity each link failure in the network. It should be noted that the number of optical supervisory channels required by the $m$-trees is equal to the number of optical supervisory channels required by link-based monitoring approach which corresponds to the theoretical minimum number of optical supervisory channels required for an unambiguous failure localization.

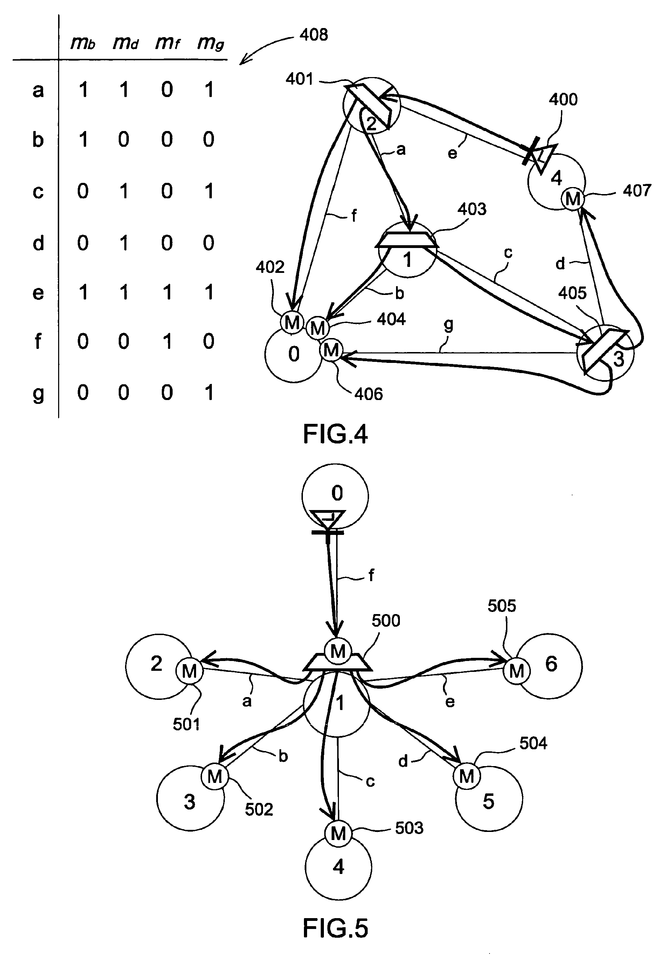

Figure 4 gives an example illustrating the m-trees concept. For this purpose, we consider a 5 nodes - 7 links, as network previously introduced in figure 1. A possible m-tree solution would consist in placing the laser diode 400 at node 4. The supervisory signal generated at node 4 is transmitted along link e towards node 2. At node 2, the supervisory signal is duplicated 401 and sent towards node 0 and node 1 along link f and link a, respectively. At node 0, the supervisory signal along link f is terminated by a monitor 402 which can detect any failure that occurs on any of link f and link e. The supervisory signal arriving at node 1 is duplicated 403 and sent towards node 0 and node 3 along link b and link c, respectively. At node 0, the supervisory signal along link b is terminated by a monitor 404 which can detect any failure that occurs on any of link b, link a, and link e. Finally, the supervisory signal arriving at node 3 is duplicated 405 and sent towards node 0 and node 4 where these signals are terminated by two monitors 406, 407. The monitor supervising link g at node 0 can detect any failure that occurs on any of link g, link c, link a, and link e, while the monitor supervising link d at node 4 can detect any failure that occurs on any of link d, link c, link a, and link e. In this example, link e corresponds to the head of the m-tree while link b, link d, link f, and link g are the leaves of the m-tree. In figure 4, a table 408 summarizing the links that are supervised by each monitor and the monitors that are alerted for each link failure.

An alarm code is a vector composed of several bits, each bit representing the state of an optical monitor. For instance, each line of the table in figure 5 corresponds to an alarm code. To localize each link failure without any ambiguity, every link in the network must have a unique alarm code. As the number of optical monitors is undetermined *a priori*, we assume that each bi-directional link is assigned an optical monitor which can be deployed at either end of the link. One of the objective is then to decide which of the optical monitors should be activated and which can be deactivated and removed while preventing any coincidence between two alarm codes. As a result, for a network composed of $|V|$ nodes and $|E|$ links, the alarm code is a vector of $|E|$ bits where the corresponding bit of a deactivated optical monitor is always set to '0'. Upon the detection of a failure, an active optical monitor will set its corresponding bit to '1'.

If the failure of a given link x would alert two optical monitors i and *j*, these monitors will set their corresponding bits to '1' in the alarm code. Thus, the alarm code associated with the failure of link x is a vector where only the $i^{th}$ bit and the $j^{th}$ are set to '1' and all the remaining bits are set to '0'. This alarm code can be viewed as the sum of two alarm codes : in the first alarm code, only the $i^{th}$ bit is set to '1' while in the second alarm code, only the $j^{th}$ bit is set to '1'. In general, the alarm code associated with the failure of a link is the sum of all the alarm codes associated to the monitors that would be alerted by the failure of the link.

As stated previously, the supervisory signal arriving at a node can be terminated at that node, forwarded towards another node over a single outgoing link, or duplicated and sent towards multiple nodes over two or more outgoing links. Let us consider the general case where the supervisory signal is broadcasted towards multiple nodes. All the other cases can be deduced from this one. For this purpose, we will consider the example plotted in figure 5. The supervisory signal arriving at node 1 along link f is duplicated 500 and forwarded towards node 2, node 3, node 4, node 5, and node 6. All the optical monitors 501, 502, 503, 504, 505 that are capable of detecting the failure of link a are also capable of detecting the failure of link f. This is also true for link b, link c, link d, and link e. Moreover, if there is an optical monitor at node 1 supervising link f, this monitor is also capable of detecting the failure of link f. Consequently, the alarm code associated with the failure of link f is equal to the sum of the alarm codes associated with the failure of link a, link b, link c, link d, and link e and the alarm code associated with the monitor located at node 1.

In general, the alarm code associated with the failure of a link is equal to the sum of the alarm code associated with the monitor at the end of the link, if such a monitor exists, and all the alarm codes associated with the failure of the links where the supervisory signal has been duplicated to. In mathematical form, this can be written as :

$$Alarm(link_{ingress}) = Alarm(monitor_{ingress}) + \sum Alarm(link_{egress})$$

By definition, a supervisory signal terminated at a node should be monitored at that node. Moreover, according to the previous equation, when the supervisory signal along an ingress link is forwarded along a single egress link, the alarm codes of both ingress and egress links will be equal unless there is a monitor placed at the end of the ingress link. Thus, it is mandatory to place an optical monitor at the end of each link that has a single egress link in order to be able to localize without ambiguity any link failure. Furthermore, if the supervisory signal along an ingress link is duplicated and sent towards two or more nodes along different egress links, the alarm code associated with the failure of the ingress link is equal to the sum of the alarm codes associated with the failure of its egress links. By adding two or more alarm codes, a new alarm code is constructed which is sufficient for an unambiguous failure localization. Consequently, the optical monitor at the end of an ingress link that has multiple egress links is not necessary and can be removed.

As it can be seen in the previous example, we removed an unnecessary optical monitor at the end of an ingress link by combining the information brought by two or more egress links. However, the gain obtained is inversely proportional to the number of egress links. As a result, the optimal solution consists in duplicating and forwarding the supervisory signal along only two egress links. Therefore, the optimal monitoring tree with the lowest number of optical monitors is a binary tree that duplicates, as much as possible, the supervisory signal into two copies whenever the supervisory signal passes through a node. It is the article written by D. P. Mehta and S. Sahni entitled Handbook of data structures and applications, Chapman & Hall/Crc Computer and Information Science Series, Jan. 2005, that a binary tree composed of $n$ ($n$ odd) branches has $\dfrac{n+1}{2}$ leaves. Thus, the minimum number of optical monitors required to monitor a network composed of $|V|$ nodes and $|E|$ links is equal to $\left\lceil \dfrac{|E|+1}{2} \right\rceil$.

The m-tree design problem consists in defining the position of the laser diode, minimizing the number of optical monitors, determining their positions, and building a tree structure that allows us to detect and localize any single link failure without any ambiguity. The problem can be formulated as an integer linear program (ILP) which can be solved by means of linear solvers.

A set of parameters is defined as described below.

The network physical topology is represented by a set $V = \{v_i;\ i = 1...\ N\}$ of $N$ nodes and a set $E = \left\{ e_l = \left( v_i^l, v_j^l \right) \in V \times V, l = 1 ...\ L \right.$ such that $\left. v_i^l < v_j^l \right\}$ of $L$ bidirectional fiber-links interconnecting these nodes.

Let $F$ be the set of all unidirectional fiber-links in the network. If $e_l = \left( v_i^l, v_j^l \right)$ is a link in $E$, then $e_l = \left( v_i^l, v_j^l \right)$ and $e_l^T = \left( v_j^l, v_i^l \right)$ are links in $\mathcal{F}$. There exist $2 \times L$ unidirectional fiber-links in the network. In the sequel, we use the notation $e_{lT}$ to denote the link in the opposite direction of $e_l$.

As stated previously, each bidirectional link $e_l \in E$ is assigned an optical monitor $m_l$ which can be deployed at either end of the link. Upon the failure of a link, an active monitor $m_l$ alerted by the failure of that link will set to '1' the $l^{th}$ bit of the alarm code. Thus, we assign to each monitor $m_l$ an alarm code $C_i^b$ where all the bits are set to '0' except the one corresponding to the number of the monitor. The alarm code $C_i^b$ can also be converted into its equivalent decimal value representation $C_i^d$. Let $\mathbb{C}$ be the set of all the alarm codes assigned to the monitors; $\mathbb{C} = \left\{ C_i^d,\ i = 1 ...L \right\}.$

Two parameters $A$ and $B$ are defined as follow :

$$A \gg 2^{|E|} \quad \text{and} \quad B \ll 2^{-|E|} \quad (2)$$

Variables are defined as follow :

- The binary variables $s_i$ ($i$ = 1, ...., 2 × $L$) for selecting the head of the tree.

$$s_i = \begin{cases} 1, & \text{if link } e_i \in \mathcal{F} \text{ is selected as the head of the tree;} \\ 0, & \text{otherwise.} \end{cases} \quad (3)$$

- The binary variables $d_i$ ($i$ = 1,..., 2 × $L$) for selecting the leafs of the tree.

$$d_i = \begin{cases} 1, & \text{if link } e_i \in \mathcal{F} \text{ is selected as a leaf of the tree;} \\ 0, & \text{otherwise.} \end{cases} \quad (4)$$

- The binary variables $g_i$ (i = 1,...,2 × $L$) for selecting the links belonging to the tree.

$$d_i = \begin{cases} 1, & \text{if link } e_i \in \mathcal{F} \text{ belongs to the tree;} \\ 0, & \text{otherwise.} \end{cases} \quad (5)$$

- The binary variables $z_{l,k}$ ($l$ = 1,..., 2 × $L$, $k$ = 1, ..., 2 × $L$) representing the way the supervisory signal is transmitted through the network. More precisely, $z_{l,k}$ indicates if $e_k$ is an egress link of $e_l$.

$$z_{l,k} = \begin{cases} 1, & \text{if the supervisory signal along } e_k \in \mathcal{F} \text{ is transmitted along } e_l \in \mathcal{F}; \\ 0, & \text{otherwise.} \end{cases}$$

- The non-negative real variables $linz_{i,j}$ ($i$ = 1, ..., $L$, $j$ = 1,..., $L$) used for intermediate calculation.

- The positive real variables $\mathcal{A}_i$ ($i$ = 1,...,$L$) corresponding to the decimal representation of the alarm code associated to the failure of link $e_i$($e_i \in E$).

- The binary variables $f_{i,j}$($i$ = 1,..., $L$, $j$ = 1,..., $L$) comparing the alarm codes associated to $e_i$ and $e_j$ ($e_i \in E$, $e_j \in E$).

In the m-tree approach, a single laser diode is usually sufficient to monitor all the network. Thus, a single link is considered as the head of the m-tree.

$$\sum_{i=1}^{2 \times L} s_i = 1 \quad (7)$$

The head of the m-tree as well as the leaves belong to the tree structure.

$$\forall i = 1, \dots, 2 \times L.$$

$$\begin{aligned} g_i &\geq s_i \\ g_i &\geq d_i \end{aligned} \quad (8)$$

Only the head of the m-tree generates a supervisory signal. All the other links copy the supervisory signal from another link having a node in common. $\forall e_l = (v_i^l, v_j^l) \in \mathcal{F}$:

$$\sum_{\substack{e_k = (v_i^k, v_j^k) \in \mathcal{F} \\ \text{such that } v_j^k = v_i^l}} g_k \geq g_l - s_l \quad (9)$$

All the bi-directional links belong to the m-tree structure. However, if a link $\forall e_l \in \mathcal{F}$ belongs to the m-tree ($g_l$ = **1**), the link in the opposite direction $e_l T$ cannot be used ($g_l T$ = 0). This will impact the placement of the optical monitor on that link. $\forall e_l = (v_i^l, v_j^l) \in E$:

$$g_l + g_l T = 1 \quad (10)$$

The links that do not belong to the m-tree structure do not carry any supervisory signal. $\forall e_l \in \mathcal{F}$, $\forall e_k \in \mathcal{F}$

$$\begin{aligned} z_{l,k} &\leq g_l \\ z_{l,k} &\leq g_k \end{aligned} \quad (11)$$

The supervisory signal cannot be transmitted from one link $e_l = (v_i^l, v_j^l) \in \mathcal{F}$ to another link $e_k = (v_i^k, v_j^k) \in \mathcal{F}$ unless they have a node in common $(v_j^l = v_i^k)$. $\forall e_l = (v_i^l, v_j^l) \in \mathcal{F}, \forall e_k = (v_i^k, v_j^k) \in \mathcal{F}$ such that $v_j^l \neq v_i^k$

$$z_{l,k} = 0 \quad (12)$$

The head of the tree generates itself the supervisory signal and does not copy it from another link. In other words, the head of the tree does not have any ingress link. $\forall e_l \in \mathcal{F}$, $\forall e_k \in \mathcal{F}$

$$z_{l,k} \leq 1 - s_k \quad (13)$$

Only the links that are reported as leaves can terminate the supervisory signal. In other words, a leaf of the tree may not have any egress link. $\forall e_l \in \mathcal{F}$

$$\sum_{e_k \in \mathcal{F}} z_{l,k} \geq g_l - d_l \quad (14)$$

An ingress link may have multiple egress links. However, an egress link has one and only one ingress link.

$$\forall e_k \in \mathcal{F}$$

$$\sum_{e_l \in \mathcal{F}} z_{l,k} = g_k - s_k \quad (15)$$

The head of the tree generates itself the supervisory signal. All the links copy it from each other. Thus, the number of times the supervisory signal is copied is equal to $|E|$- 1.

$$\sum_{e_l \in \mathcal{F}} \sum_{e_k \in \mathcal{F}} z_{l,k} = |E| - 1 \quad (16)$$

The alarm code associated with the failure of a bidirectional link $e_l \in E$ can be expressed as:

$$\forall e_l \in E$$

$$\mathcal{A}_l = \left(d_l + d_{l^T}\right) \times c_l^d + \sum_{e_k \in E} \left(z_{l,k} + z_{l^T,k} + z_{l,k^T} + z_{l^T,k^T}\right) \times \mathcal{A}_k$$
$$= \left(d_l + d_{l^T}\right) \times c_l^d + \sum_{e_k \in E} linz_{l,k} \quad (17)$$

In the previous equation, the term $linz_{l,k} = (z_{l,k} + z_{lT,k} + z_{l,k}T + z_{lT,kT}) \times \mathcal{A}_k$ is not linear because it is the product of a binary variable by an integer variable. Noticing that this product can be also written as $linz_{l,k} = \min((z_{l,k} + z_{lT,k} + z_{l,kT} + z_{lT,kT}) \times A, \mathcal{A}_k)$, we can rewrite it in linear form as follows:

$$\forall e_l \in E, \forall e_k \in E$$

$$linz_{l,k} \leq \left(z_{l,k} + z_l\tau_{,k} + z_{l,k}\tau + z_l\tau_{,k}\tau\right) \times A$$
$$linz_{l,k} \leq \mathcal{A}_k \qquad (18)$$
$$linz_{l,k} \geq \left(z_{l,k} + z_l\tau_{,k} + z_{l,k}\tau + z_l\tau_{,k}\tau - 1\right) \times A + \mathcal{A}_k$$

All the network links should be monitored. Thus, none of the alarm codes should be equal to zero.

$$\forall e_l \in E$$

$$\mathcal{A}_l \geq 1 \quad (19)$$

Finally, every link in the network must have a unique alarm code for an unambiguous failure localization.

$$\forall e_l = (v_i^l, v_j^l) \in E, \forall e_k = (v_i^k, v_j^k) \in E \text{ such that } v_i^l \neq v_i^k \text{ or } v_j^l \neq v_j^k$$

$$B - 2 \times f_{l,k} \leq B \times (\mathcal{A}_l - \mathcal{A}_k)$$
$$f_{l,k} + f_{k,l} = 1 \qquad (20)$$

The following constraints are not mandatory but they were used to speed up the execution of the solver used to find the optimal m-tree structure.

The minimum number of optical monitors is equal to $\left\lceil \dfrac{|E|+1}{2} \right\rceil$. Thus the m-trees has at least $\left\lceil \dfrac{|E|+1}{2} \right\rceil$ leaves.

$$\sum_{i=1}^{2 \times L} d_i \geq \left\lceil \frac{|E| + 1}{2} \right\rceil \quad (21)$$

It is mandatory to place an optical monitor at the end of each ingress link that has a single egress link in order to be able to localize without ambiguity any link failure.

$$\forall e_l \in E$$

$$1 - 0.5 \times \sum_{e_k \in \mathcal{F}} (z_{l,k} + z_l\tau_{,k}) \leq d_l + d_l\tau \quad (22)$$

The objective is to minimize the number of deployed optical monitors while still achieving an unambiguous failure localization

$$\text{Minimize} \sum_{i=1}^{2 \times L} d_i \quad (23)$$

The previous formulation is general and works for small networks up to 25 links. However, as the number of links increases, the parameters *A* and *B* become very large and very small, respectively. This leads to numerical instabilities in the linear solver. In order to cope with this problem, it possible to propose to apply the following changes :

1) Parameters:

• We still assign to each bidirectional link an optical monitor which can be deployed at either end of the link. A monitor $m_i$ is assigned an alarm code $\mathcal{C}_i^b$ composed of |*E*| bits where all the bits are set to '0' except the one corresponding to the number of the monitor. The alarm code $\mathcal{C}_i^b$ can be decomposed into blocks of 20 bits each. After converting each block of 20 bits into its equivalent decimal value representation, the decimal alarm code $\mathcal{C}_i^d$ assigned to a monitor $m_i$ is then represented as a tuple $\left( \mathcal{C}_{i,1}^d, \mathcal{C}_{i,2}^d, ..., \mathcal{C}_{i,Q}^d \right)$ composed of $Q = \left\lceil \dfrac{|E|}{20} \right\rceil$ components. Let $\mathbb{C}$ be the set of all the alarm codes assigned to the monitors $\mathbb{C} = \{ \mathcal{C}_i^d, i = 1 \, ... \, L \}$.

• The two parameters *A* and *B* (cf. Equation (2)) are now defined as follows:

$$A > 2^{20} \quad \text{and} \quad B < 2^{-20} \quad (24)$$

2) Variables : The variables *linz*, $\mathcal{A}$ , and *f* should be redefined as follows:

- The non-negative real variables $linz_{i,j,q}$ ($i = 1,...,L$, $j = 1,...,L$, $q = 1, ..., Q$) used for intermediate calculation.
- The positive integer variables $\mathcal{A}_{i,q}$ ($i = 1,...,L$, $q = 1, ..., Q$) used corresponding to the decimal representation of the $q^{th}$ block of 20 bits in the alarm code associated with the failure of link $e_i$ ($e_i \in E$).
- The binary variables $f_{i,j,k}$ ($i = 1, ..., L$, $j = 1, ..., L$, $q = 1, ..., Q$) comparing the alarm codes associated with $e_i$ and $e_j$ ($e_i \in E$, $e_j \in E$).

3) Constraints :

- The alarm code (cf. Equation (17)) associated with the failure of a bi-directional link $e_l \in E$ is now expressed as: $\forall e_l \in E$, $q = 1, ..., Q$

$$\begin{aligned} \mathcal{A}_l &= \left( d_l + d_l^T \right) \times \mathcal{C}_{l,q}^d + \sum_{e_k \in E} \left( z_{l,k} + z_{l,k}^T + z_{l,k}^T + z_{l,k}^{T,T} \right) \times \mathcal{A}_{k,q} \\ &= \left( d_l + d_l^T \right) \times \mathcal{C}_l^{,q\,d} + \sum_{e_k \in E} linz_{l,k,q} \end{aligned} \quad (25)$$

- The variable $linz_{l,k,q} = (z_{l,k} + z_l^T{}_{,k} + z_{l,k}^T + z_{lT,kT}) \times \mathcal{A}_{k,q}$ (*cf.* Equation (18) written in linear form: $\forall e_l \in E$, $\forall e_k \in E$, $q = 1,..., Q$

$$linz_{l,k,q} \leq \left(z_{l,k} + z_{l^T,k} + z_{l,k^T} + z_{l^T,k^T}\right) \times A$$
$$linz_{l,k,q} \leq \mathcal{A}_{k,q} \qquad\qquad (26)$$
$$linz_{l,k,q} \geq \left(z_{l,k} + z_{l^T,k} + z_{l,k^T} + z_{l^T,k^T} - 1\right) \times A + \mathcal{A}_{k,q}$$

- All the network links should be monitored. Thus, none of the alarm codes should be equal to zero (*cf.* Equation (19) $\forall e_l \in E$

$$\sum_{q=1\ldots Q} \mathcal{A}_{l,q} \geq 1 \quad (27)$$

- Finally, every link in the network must have a unique alarm code for an unambiguous failure localization (*cf.* Equation (20)). $\forall e_l = \left(v_i^l, v_j^l\right) \in E, \ \forall e_k = \left(v_i^k, v_j^k\right) \in E, q = 1, \ldots, Q$ such that $v_i^l \neq v_i^k$ or $v_j^l \neq v_j^k$

$$B - 2 \times f_{l,k,q} \leq B \times \left(\mathcal{A}_{l,q} - \mathcal{A}_{k,q}\right)$$
$$\sum_{q=1\ldots Q} \left(f_{l,k,q} + f_{k,l,q}\right) \leq 2 \times Q - 1 \quad (28)$$

4) Objective : The objective remains the same: minimizing the number of deployed optical monitors while still achieving an unambiguous failure localization

$$\textbf{Minimize} \sum_{i=1}^{2 \times L} d_i \quad (29)$$

This invention takes advantage of the broadcasting capability within a transparent network node to keep the number of supervisory channels to a minimum. This theoretical minimum is equal to the number of network links. Moreover, it does not neglect the hardware cost. Indeed, it uses a single laser diode at the head of the tree and aims at minimizing the number of required optical monitors. The *m*-tree design problem consists in defining the position of the laser diode, minimizing the number of optical monitors, determining their positions, and building a tree structure that allows us to detect and localize any single link failure without any ambiguity.

Compared to other known approaches, the m-trees significantly reduces the total monitoring cost (i.e. laser diode, optical monitors, and supervisory channels). By reducing the number of laser diodes and optical monitors, the power consumption of the network is also reduced. Furthermore, using a minimum number of optical supervisory channels has a impact on network design and management. On the one hand, when designing a network that can satisfy a given set of traffic demands, the m-tree approach consumes a lower number of optical ports at the switch fabric side. As a result, the power consumed by the switch may be reduced. On the other hand, for operational networks, using a minimum number of supervisory channels assigned the same wavelength does not only reduce the blocking ratio in the network due to the lack of network resources, but also reduces the blocking ratio due to the wavelength continuity constraint. Consequently, the network operator can satisfy a larger number of real traffic demands.

Multiple m-trees can be used in order to detect multiple failures that may simultaneously occur in the network as well as the failure of monitoring devices (laser diodes and monitors). Such an approach consists in overlaying several trees covering the whole network. Each m-tree has its own laser diode transmitting a supervisory signal to a set of optical monitors. However, these m-trees must ensure that the alarm code associated with the failure of multiple links does not coincide with the alarm code of single link failure.

The concept of multiple m-trees is not limited to the detection and localization of multiple link failures. For instance, the use of multiple m-trees may be motivated by reducing the reach of optical signal or by limiting the geographical area supervised by a single tree. In this respect, an m-tree covering the whole network can be divided into multiple sub-trees.

The m-trees concept has been investigated and formulated as a linear optimization problem. Such a problem can be solved by means of various ILP solvers for small and large size networks. However, the solution of such a problem is not limited to ILP solvers and can be solved using other exact techniques such as Brunch and Bound algorithm and heuristic techniques such as Simulated Annealing and Genetic algorithms.

## Claims

1. An optical network comprising a plurality of nodes connected via two or more optical links (a, b, c, d, e, f, g), **characterized in that** it comprises means to generate a supervisory optical signal transmitted through the optical links, means to duplicate and forward (401, 403, 405) the supervisory optical signal received by a node towards one or several other nodes, a plurality of optical monitors (402, 404, 406, 407), the said monitors being arranged in order to detect disruptions of the supervisory optical signal and to determine an alarm code (408) allowing to localize network failures.

2. An optical network according to claim 1 **characterized in that** each optical link is associated with a unique alarm code, an alarm code being a vector composed of several bits where each bit corresponds to the state of an optical monitor (402, 404, 406, 407).

3. An optical network according to any of the previous claims **characterized in that** the supervisory optical signal is generated by a laser diode (400).

4. An optical network according to any of the previous claims **characterized in that** the supervisory optical signal is carried by the same wavelength on all the network links.

5. An optical network according to any of the previous claims **characterized in that** the supervisory optical signal is duplicated (401) into two copies whenever it passes through a node.

6. A method for unambiguous failure localization in optical networks, the said network comprising a plurality of nodes, a node being connected to at least another node by using an optical link (a, b, c, d, e, f, g) **characterized in that** :

   - a supervisory optical signal is generated by a laser diode (400) and transmitted through the optical links ;
   - the supervisory signal is received by network nodes and is duplicated and forwarded (401) towards one or several other nodes ;
   - an alarm code (408) is deduced from detected disruptions of the supervisory optical signal, the said disruptions being detected by a plurality of optical monitors (402, 406, 407).

7. A method according to claim 6 **characterized in that** the supervisory optical signal is carried by the same wavelength on all the network links.

8. A method according to any of claims 6 or 7 **characterized in that** an alarm code (408) corresponds to a vector composed of several bits, each bit representing the state of an optical monitor.

9. A method according to any of claims 6 to 8 **characterized in that** the supervisory optical signal is duplicated (401) into two copies whenever it passes through a node.

FIG.1

| | $c_1$ | $c_2$ | $c_3$ |
|---|---|---|---|
| a | 0 | 1 | 1 |
| b | 1 | 1 | 0 |
| c | 1 | 0 | 1 |
| d | 0 | 0 | 1 |
| e | 0 | 0 | 1 |
| f | 0 | 1 | 0 |
| g | 1 | 0 | 0 |

FIG.2

| | $t_1$ | $t_2$ | $t_3$ |
|---|---|---|---|
| a | 0 | 1 | 0 |
| b | 1 | 0 | 0 |
| c | 1 | 1 | 0 |
| d | 1 | 0 | 1 |
| e | 0 | 0 | 1 |
| f | 0 | 1 | 1 |
| g | 1 | 1 | 1 |

FIG.3

|   | $m_b$ | $m_d$ | $m_f$ | $m_g$ |
|---|---|---|---|---|
| a | 1 | 1 | 0 | 1 |
| b | 1 | 0 | 0 | 0 |
| c | 0 | 1 | 0 | 1 |
| d | 0 | 1 | 0 | 0 |
| e | 1 | 1 | 1 | 1 |
| f | 0 | 0 | 1 | 0 |
| g | 0 | 0 | 0 | 1 |

FIG.4

FIG.5

Europäisches
Patentamt

European
Patent Office

Office européen
des brevets

**EUROPEAN SEARCH REPORT**

Application Number

EP 10 29 0134

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BIN WU ET AL: "Monitoring Trail: On Fast Link Failure Localization in All-Optical WDM Mesh Networks" JOURNAL OF LIGHTWAVE TECHNOLOGY, IEEE SERVICE CENTER, NEW YORK, NY, US LNKD-DOI:10.1109/JLT.2009.2022769, vol. 27, no. 18, 5 September 2009 (2009-09-05), pages 4175-4185, XP011268770 ISSN: 0733-8724 * the whole document * ----- | 1-9 | INV. H04B10/08 H04L12/24 H04L12/26 |
| A,D | BIN WU ET AL: "M2 -CYCLE: an Optical Layer Algorithm for Fast Link Failure Detection in All-Optical Mesh Networks" GLOBAL TELECOMMUNICATIONS CONFERENCE, 2006. GLOBECOM '06. IEEE, IEEE, PI, 27 November 2006 (2006-11-27), pages 1-5, XP031462699 ISBN: 978-1-4244-0356-1 * the whole document * ----- | 1-9 | |
| A | SAVA STANIC ET AL: "Monitoring and alarm management in transparent optical networks" BROADBAND COMMUNICATIONS, NETWORKS AND SYSTEMS, 2007. BROADNETS 2007. FOURTH INTERNATIONAL CONFERENCE ON, IEEE, PISCATAWAY, NJ, USA, 10 September 2007 (2007-09-10), pages 828-836, XP031276723 ISBN: 978-1-4244-1432-1 * the whole document * ----- | 1-9 | TECHNICAL FIELDS SEARCHED (IPC) H04B H04L |
| A | US 2009/161536 A1 (GROVER WAYNE D [CA] ET AL) 25 June 2009 (2009-06-25) * the whole document * ----- -/-- | 1-9 | |

The present search report has been drawn up for all claims

| Place of search | Date of completion of the search | Examiner |
|---|---|---|
| Munich | 18 August 2010 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

**EUROPEAN SEARCH REPORT**

Application Number

EP 10 29 0134

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 980 834 A1 (FUJIKURA LTD [JP]) 15 October 2008 (2008-10-15) * abstract * * paragraph [0078] - paragraph [0083] * * figure 1 * ----- | 1,3-7,9 | |

TECHNICAL FIELDS
SEARCHED        (IPC)

The present search report has been drawn up for all claims

| Place of search | Date of completion of the search | Examiner |
|---|---|---|
| Munich | 18 August 2010 | Rolan Cisneros, E |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 10 29 0134

This annex lists the patent family members relating to the patent documents cited in the above-mentioned European search report.
The members are as contained in the European Patent Office EDP file on
The European Patent Office is in no way liable for these particulars which are merely given for the purpose of information.

18-08-2010

| Patent document cited in search report | | Publication date | Patent family member(s) | | Publication date |
|---|---|---|---|---|---|
| US 2009161536 | A1 | 25-06-2009 | NONE | | |
| EP 1980834 | A1 | 15-10-2008 | WO | 2007088976 A1 | 09-08-2007 |
| | | | US | 2009190921 A1 | 30-07-2009 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. DEMEESTER et al.** Resilience in multilayer networks. *IEEE Communications Magazine,* August 1999, vol. 37 (8), 70-76
- **H. ZENG ; C. HUANG ; A. VUKOVIC ; M. SAVOIE.** Fault detection and path performance monitoring in meshed all-optical networks. *Proc. of IEEE Globecom,* November 2004, vol. 3, 2014-2018
- **H. ZENG ; C. HUANG ; A. VUKOVIC.** Spanning-tree based monitoring-cycle construction for fault detection and localization in meshed all-optical networks. *Proc. of IEEE ICC,* May 2005, vol. 3, 1726-1730
- A novel fault detection and localization scheme for mesh all-optical networks based on monitoring cycles. *Photon Network Communications,* May 2006, vol. 11 (3), 277-286

- **B. WU ; K. L. YEUNG.** M2-Cycle: an optical layer algorithm for fast link failure detection in all-optical mesh networks. *Proc. of IEEE Globecom,* November 2006, 1-5
- **B. WU ; P. H. HO ; K. L. YEUNG.** Monitoring Trail: a new paradigm for fast link failure localization in WDM mesh networks. *Proc. of IEEE Globecom,* November 2008, 2709-2713
- **J. TAPOLCAI ; B. WU ; P. H. HO.** On monitoring and failure localization in mesh all-optical networks. *Proc. IEEE Infocom,* April 2009, 1008-1016
- **D. P. MEHTA ; S. SAHNI.** Handbook of data structures and applications. Chapman & Hall/Crc Computer and Information Science Series, January 2005